# EUROPEAN PATENT APPLICATION

(11) **EP 3 263 451 A1**
(43) Date of publication of application: **03.01.2018**
(21) Application number: 16400022.6
(22) Date of filing: 28.06.2016
(51) Int. Cl.: B64C 25/52, B64C 27/04, B64D 37/04

(54) **AN AIRCRAFT WITH A FUSELAGE AND A NON-RETRACTABLE SKID-TYPE LANDING GEAR**

(71) Applicant: AIRBUS HELICOPTERS DEUTSCHLAND GmbH, 86609 Donauwörth (DE)
(72) Inventor: Fink, Axel, D-86609 Donauwörth (DE)
(74) Representative: GPI & Associés

(57) **Abstract**

The invention is related to an aircraft 1 with a fuselage 2 and a non-retractable skid-type landing gear 10 that is mounted to the fuselage 2, the non-retractable skid-type landing gear 10 comprising at least one landing box 10a, the at least one landing box 10a being provided with a skid-type landing base member 10k and an associated box shell 10c that delimits an internal volume of the at least one landing box 10a.

## Description

The invention is related to an aircraft with a fuselage and a non-retractable skid-type landing gear that is mounted to the fuselage.

In general, landing gears of aircrafts are either provided as retractable landing gears, or as fixed, i. e. non-retractable landing gears. Retractable landing gears are usually embodied as wheel-type landing gears, while fixed landing gears are usually embodied as skid-type landing gears.

Use of a wheel-type landing gear or a skid-type landing gear for a given aircraft mostly depends on a respective size and weight of the given aircraft. In other words, retractable wheel-type landing gears are usually implemented with larger aircrafts, in particular helicopters, in order to allow for an improved ground handling of such larger helicopters, while light-to-medium aircrafts, in particular helicopters, are usually implemented with non-retractable skid-type landing gears.

More specifically, retractable wheel-type landing gears generally comprise retractable wheels that are heavy and, thus, require complex, vulnerable and maintenance intensive actuator systems, movable parts and brake systems, as well as adequate storage compartments, either within a respective fuselage body of a given helicopter, or outside thereof within additional sponsons. Such retractable wheel-type landing gears are suitable for considerably reducing an inherent drag penalty induced by conventional non-retractable skid-type landing gears, hence, improving efficiency of the helicopter by allowing for greater speed and increased fuel economy over long distances.

In contrast thereto, non-retractable skid-type landing gears are simple in design, cost-effective, do not require expensive maintenance, allow a landing on unprepared ground and are embodied for contributing, in case of a downward crash of a given helicopter, to energy dissipation by means of plastic deformation. An exemplary non-retractable skid-type landing gear is described in the document EP 2 610 170 A1.

However, such non-retractable skid-type landing gears considerably increase an underlying aerodynamic drag, which can reach up to 20% of a total drag of a given helicopter. More specifically, non-retractable skid-type landing gears are usually tubular constructions consisting of longitudinal tubes which are attached to two transversal cross tubes, the latter being attached to a lower part of a fuselage of a given helicopter at its horizontally arranged mid portion. As the transversal cross tubes have a decisive contribution to an overall drag produced by the non-retractable skid-type landing gear, their vertically arranged lateral portions can be covered by a non-load carrying streamlined fairing. Respective mid portions of the cross tubes can either be arranged underneath a lower shell of a fuselage of a given helicopter, or they can be housed within a dedicated cavity of the lower shell. For the former design, the entire length of the cross tubes contributes to drag increase, whereas for the latter design the drag contribution of the cross tubes only emanates from their lateral portions at the expense of a required increased structural complexity of the lower shell, which has to entirely accommodate a respective horizontal portion of the cross tubes.

Furthermore, an underlying design of respective skids needs to account for crash and ground resonance behavior. Therefore, skid designs may incorporate telescopic sections with oleopneumatic functions for absorption of impacts at hard landings on the one hand, and for controlling ground-resonance by specific spring and bumper capabilities on the other hand.

In addition to the above described factors, a total drag produced by non-retractable skid-type landing gears is severely increased by additional items, i. e. external outboard equipment, such as boarding steps, emergency floatation systems, optic sensorial systems, lights, live rafts, armament, etc. External fuel tanks are also used as additional items in order to ensure long range missions, the tanks being easily detachable and typically shaped as long cylinders that are attached to main fuselages or pylons of helicopters. Therefore, such external fuel tanks are also considered as outboard equipment hereinafter.

Such outboard equipment is, in light-to-medium helicopters with non-retractable skid-type landing gears, usually directly attached to respective skids of the non-retractable skid-type landing gears or to the helicopter fuselages in the vicinity of the non-retractable skid-type landing gears. Thus, the attached outboard equipment is directly exposed to an airstream that is generated during forward flight, as well as to downwash during hovering, hence, producing considerable additional drag and, consequently, leading to a significant drag penalty that results in undesired flight efficiency reductions. Furthermore, the attached outboard equipment is exposed to environmental impacts and negatively affects a respective appearance of a given helicopter. Therefore, selected outboard equipment items are alternatively housed in the helicopter's fuselage within fuselage compartments that are delimited by the helicopter's internal structural framework and an outer loft of the fuselage.

While such alternatives reduce an amount of externally attached outboard equipment items and, thus, reduce the above-described drag penalty, they, however, require access openings within a respective fuselage side shell, which negatively affects an overall structural integrity and, hence, the fuselage shell's overall load bearing capability. Furthermore, provision of such fuselage compartments considerably reduces an available volume for required operation systems, such as electrical, hydraulic and air systems or even fuel.

In general, small helicopters with non-retractable skid-type landing gears offer comparatively few free volumes for provision of fuselage compartments and, thus, integration of outboard equipment within such fuselage compartments, and it is easier and cheaper to provide for an attachment outside of the small helicopters. This allows for having a common generic basis structure of small helicopters for all possible missions, while providing variable items in the form of outboard equipment, which is on a mission-specific basis selected and attached to the smaller helicopters as described above.

Medium helicopters with non-retractable skid-type landing gears typically house outboard equipment within their fuselage. This is possible due to an available volume between inner structure and outer loft and imperative due an underlying large size of the outboard equipment, making it undesired to store it outside of the medium helicopter.

Large helicopters with retractable wheel-type landings gears have wheels that are housed within sponsons as described above, which are closed aerodynamic fairings that are also suitable for accommodating outboard equipment. The aerodynamic tailoring of such sponsons is crucial in terms of an acceptable overall aerodynamic efficiency of the large helicopters.

It should, however, be noted that other types, in particular mixed types of landing gears also exist and are also exploited. For instance, non-retractable skid-type landing gears may be provided with small ground handling wheels to improve ground handling of a corresponding aircraft. Furthermore, skid-type landing gears can be implemented in the retractable form in order to reduce drag, which is, however, at the expense of some acceptable additional weight and structural complexity, i. e. with respect to an additional required retraction actuator system. Such retractable skid-type landing gears are e. g. described in the documents EP 2 371 710 B1 and GB 726 573 A. Moreover, wheel-type landing gears can be implemented in non-retractable form, i. e. without an otherwise required actuator system, in order to save the actuator system's weight, whilst ensuring sufficient ground handling capabilities of corresponding aircrafts. Such mixed types of landing gears are, however, rather exceptional and, therefore, not described in more detail hereinafter.

In summary, while retractable wheel-type landing gears are usually bulky and generally result in an undesired, comparatively huge additional weight in helicopters, non-retractable skid-type landing gears are characterized by a comparatively huge and undesired drag penalty and a reduced aerodynamic efficiency. Furthermore, an aerodynamically efficient carriage of outboard equipment is, independent of a respectively selected type of landing gear, complicated and rather unsatisfying.

It is, therefore, an object of the present invention to provide a new helicopter and, more generally, a new aircraft with a fuselage and a non-retractable skid-type landing gear that is mounted to the fuselage, the new aircraft exhibiting an improved aerodynamic efficiency even when carrying associated outboard equipment.

This object is solved by an aircraft with a fuselage and a non-retractable skid-type landing gear that is mounted to the fuselage, the aircraft comprising the features of claim 1.

More specifically, according to the present invention an aircraft with a fuselage and a non-retractable skid-type landing gear that is mounted to the fuselage is provided, wherein the non-retractable skid-type landing gear comprises at least one landing box. The at least one landing box is provided with a skid-type landing base member and an associated box shell that delimits an internal volume of the at least one landing box.

According to one aspect of the present invention, the aircraft is embodied as a helicopter that comprises a fuselage and a non-retractable skid-type landing gear that is mounted to the fuselage. In other words, the landing gear is fixedly mounted to the fuselage of the helicopter and non-wheeled. However, the non-retractable skid-type landing gear does not reflect a conventional tube design, which is usual for skid-type landing gears. Instead, the non-retractable skid-type landing gear is based on a blended skid pod design featuring two closed, structural pod boxes that are also referred to as "landing boxes" below.

Preferably, the two closed, structural pod boxes extend at each side of the helicopter, i. e. they are arranged laterally and, preferentially, at least approximately in parallel to the helicopter's roll axis. Each closed, structural pod box is preferably at least essentially composed of at least two main ribs and a hull, i. e. an encasing that encloses, i. e. encases these main ribs. A lateral loft of the hull preferentially defines a smooth continuation of an adjacently arranged fuselage side loft. The at least two main ribs are preferably designed as main load bearing elements that provide for proper landing gear stiffness, support of internally housed equipment and energy dissipation in a crash scenario. These at least two main ribs preferentially connect each closed, structural pod box to a lateral, lower portion of the main frames of the helicopter's fuselage. However, no tubular elements extend from one side to the other side of the helicopter, as it is usually the case for conventional tube designs.

An underlying width of each closed, structural pod box, seen in a longitudinal cross section plane at a lowest plane of a lower shell of the helicopter's fuselage, is preferably a fraction of an overall fuselage width of the helicopter. A longitudinal cross section shape of each closed, structural pod box is preferentially streamlined and aerodynamically optimized in order to generate only a comparatively low aerodynamic drag during forward flight of the helicopter in operation and in order to provide improved aerodynamic transition properties to the helicopter's intermediate and tail structure.

A longitudinal extension of each closed, structural pod box preferably essentially covers an associated skid basis of respectively provided skids, which are preferentially embodied as tubular skids and also referred to as "landing base members" hereinafter. More generally, a lower part of each closed, structural pod box preferably integrates such landing base members, which could be simple fixed landing skid devices or advanced damped devices that are specifically designed to account for impact attenuation as well as landing and ground resonance requirements.

Preferably, each closed, structural pod box defines an internal volume that is, preferentially, at least essentially hollow and can, thus, be used as housing compartment for outboard equipment, such as boarding steps, emergency floatation systems, optic sensorial systems, lights, live rafts, armament, external fuel tanks etc. In one variant, the boarding steps are integrally incorporated into the hull, i. e. the encasing of each closed, structural pod box, and access openings are provided therein for access to the outboard equipment. Hence the hull, i. e. the encasing of each closed, structural pod box, preferably defines a fairing protecting the outboard equipment and contributing to aerodynamic efficiency.

According to one aspect of the present invention, each closed, structural pod box is designed as an exchangeable unit that is adapted for carrying selected, specific outboard equipment depending on a respective flight mission of the helicopter. Connection, i. e. coupling of each closed, structural pod box to the helicopter's fuselage is preferably designed to be simple and quickly releasable. Therefore, e. g. simple pin-in-lug joints are used for the connection of respective main structural parts, i. e. the above-described main ribs, to associated main frames, and quick release fasteners are preferably used for attachment of a respective hull skin perimeter to the helicopter's fuselage. Thus, preferably a connection can be provided that is adapted to transfer mainly shear loads that are, however, comparatively small due to a preferentially comparatively large total length of the perimeter. In contrast, a respective main connection of the main ribs is largely loaded, transmitting bending and shear loads to the associated main frames. In any case, the simple design of the joint enables interchangeability between helicopters.

Alternatively, the connection of the main ribs can be accomplished by means of screwed or riveted joints. This shall only be the case if each closed, structural pod box is not intended to be removable.

One major advantage of the inventive non-retractable skid-type landing gear is its fixed installation on a given helicopter so that use of any complex, heavy and cost-intensive kinematics can be omitted. Instead, the inventive non-retractable skid-type landing gear is cost effective, simple in terms of design, crash worthy and operable at unprepared fields.

Advantageously, the hull, i. e. the encasing of each closed, structural pod box defines a fairing that is suitable and adapted for covering relevant outboard equipment arranged within the internal volume of each closed, structural pod box, which would otherwise be exposed to an airstream that is generated during forward flight, as well as to downwash generated during hovering. Accordingly, an easy, secure and reliable encapsulation of outboard equipment can be achieved that improves an underlying style quality and contributes to protection of accommodated outboard equipment against environmental impacts. Furthermore, together with an underlying streamlined design of each closed, structural pod boxes' cross section along its longitudinal extension, the encapsulation of outboard equipment leads to an important decrease of aerodynamic drag, thus, improving a respective aerodynamic quality and consequently efficiency of the helicopter. Moreover, as due to the encapsulation of outboard equipment there are no free standing equipment units and as there are no tubular skids due to the closed, structural pod boxes, the inventive non-retractable skid-type landing gear can be adapted to provide overall stealth properties to a given helicopter.

In addition, the available internal volume of each closed, structural pod box advantageously enables integration of any type of damping devices, acting directly to a respective contact surface of the landing base member and having no detrimental impact on an underlying aerodynamic quality of the helicopter. More specifically, different closed, structural pod boxes can be individually configured and equipped as specific modules according to respective requirements of different flight missions. Hence, the closed, structural pod boxes can e. g. be designed as additional side fuel tanks for long-range operations. They can also, or alternatively, include emergency floatation systems and life rafts for oil-and-gas missions - even having some water-tight compartments to improve floatability, or they can be designed to accommodate armament for utility missions, and so on.

Advantageously, the main ribs of each closed, structural pod box are connected to a lower lateral portion of corresponding main frames of the fuselage of the helicopter within an associated interconnection region. This is preferably performed by means of simple pin-in-lug connections, as described above, which enable an easy installation and removal and are strong and reliable. The main ribs can be easily designed with regard to specific crash behavior, preferably using machined aluminum.

As the cross-section of the main ribs is not necessarily tubular, the cross section of the main ribs can advantageously be tailored to efficiently take operational loads and crush. Contrary to conventional designs of non-retractable skid-type landing gears, there is no tubular element that extends from one side to the other side of the helicopter, and which is exposed to airflow in operation of the helicopter, thus, generating drag, or which is housed within a transverse cavity of a lower shell of the helicopter's fuselage, thereby affecting its structural efficiency. Thus, the lower shell of the helicopter remains unaffected regarding integration of the inventive non-retractable skid-type landing gear and no additional drag arises due to an undesired interruption of the lower shell loft.

Advantageously, a helicopter according to the present invention can be built up with a common basic body and variable, i. e. multiple different interchangeable closed, structural pod boxes that are equipped depending on a respective specific mission of the helicopter. That means that the variability of mission dependant configurations can be focussed on a respective arrangement of different closed, structural pod boxes, but with the same core fuselage. Thus, the fabrication and an a posteriori re-configuration of a helicopter is easier to handle.

According to a preferred embodiment, the associated box shell comprises an inboard shell section and an outboard shell section. The inboard shell section and the outboard shell section are integral with the skid-type landing base member or are at least rigidly attached to the skid-type landing base member.

According to a further preferred embodiment, the outboard shell section is adapted for defining a streamlined extension to a side shell of the fuselage.

According to a further preferred embodiment, the inboard shell section is adapted for defining a streamlined extension to a lower shell of the fuselage.

According to a further preferred embodiment, the at least one landing box comprises at least two main ribs that are at least essentially arranged perpendicularly to a longitudinal extension of the at least one landing box.

According to a further preferred embodiment, the at least one landing box comprises an at least essentially massive structural support member, the at least two main ribs being integral to the at least essentially massive structural support member or being at least rigidly attached to the at least essentially massive structural support member.

According to a further preferred embodiment, the at least one landing box is mounted by means of a screwed joint and/or a pin-in-lug joint to the fuselage.

According to a further preferred embodiment, the at least one landing box is adapted for carrying aircraft equipment arranged within the internal volume.

According to a further preferred embodiment, the at least one landing box is at least adapted for carrying emergency floatation devices arranged within the internal volume.

According to a further preferred embodiment, the at least one landing box is at least adapted for carrying at least one fuel tank arranged within the internal volume.

According to a further preferred embodiment, the at least one landing box is at least partially water tight.

According to a further preferred embodiment, the at least one landing box is detachably mounted to the fuselage.

According to a further preferred embodiment, the at least one landing box comprises a root width that is at least three times smaller than an overall aircraft width.

According to a further preferred embodiment, the aircraft is a rotary wing aircraft.

The present invention further provides a non-retractable skid-type landing gear that is mountable to a fuselage of an aircraft. The non-retractable skid-type landing gear comprises at least one landing box, the at least one landing box being provided with a skid-type landing base member and an associated box shell that delimits an internal volume of the at least one landing box.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a side view of an aircraft with a fuselage and a non-retractable skid-type landing gear according to the present invention,
- Figure 2 shows a top view of the aircraft of Figure 1,
- Figure 3 shows a side view of the aircraft of Figure 1 with the highlighted non-retractable skid-type landing gear,
- Figure 4 shows a side view of the aircraft of Figure 1 with the detached non-retractable skid-type landing gear,
- Figure 5 shows a side view of the aircraft of Figure 1 with the non-retractable skid-type landing gear and schematically illustrated mounting structures,
- Figure 6 shows a front view of the aircraft of Figure 1,
- Figure 7 shows a sectional view of the aircraft of Figure 6 with the detached non-retractable skid-type landing gear and a schematically illustrated first connection variant, and
- Figure 8 shows a sectional view of the aircraft of Figure 6 with the detached non-retractable skid-type landing gear and a schematically illustrated second connection variant.

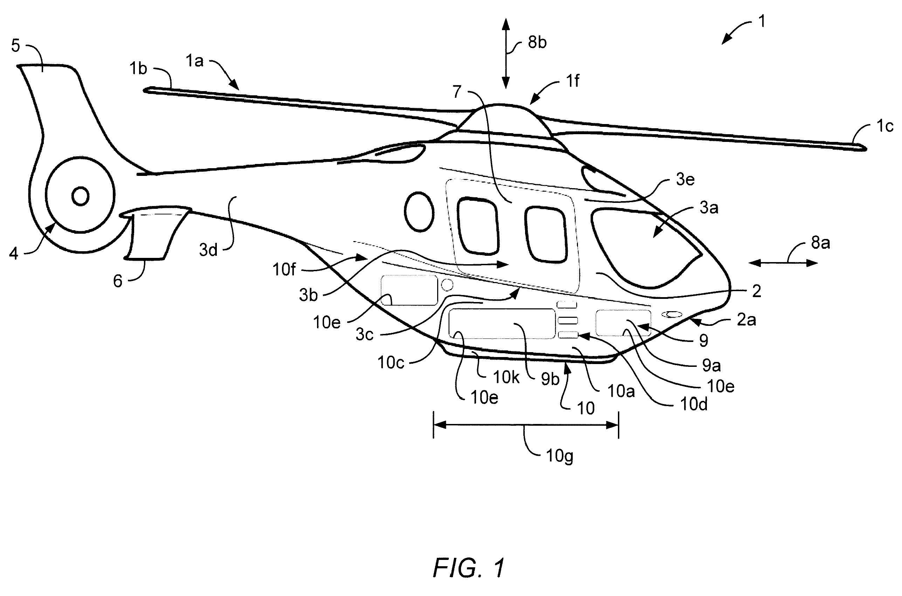

Figure 1 shows an aircraft 1 with a fuselage 2 and a non-retractable skid-type landing gear 10 that is mounted to the fuselage 2 according to one aspect of the present invention. More specifically, the fuselage 2 illustratively comprises a fuselage underside 2a that is preferably at least partly connected to the non-retractable skid-type landing gear 10.

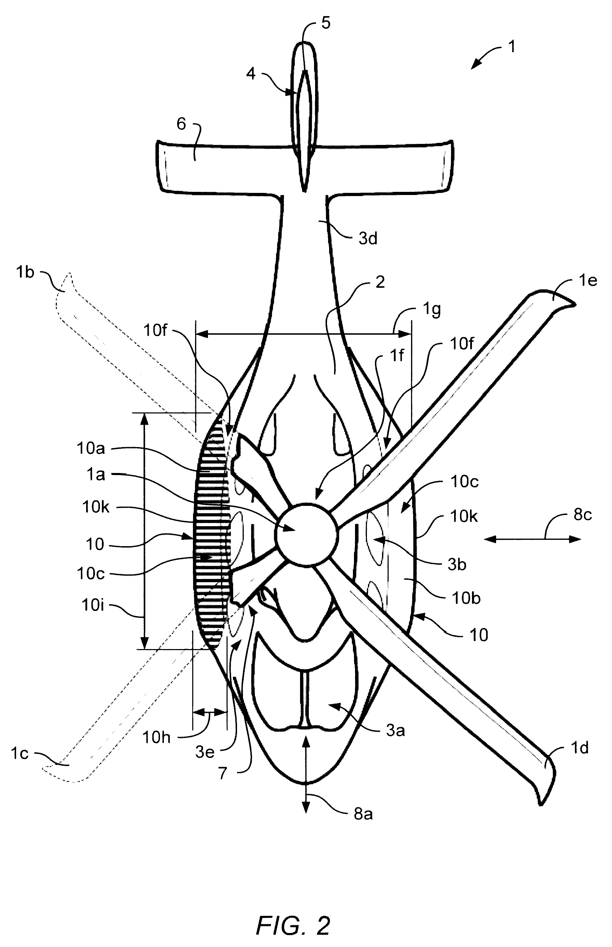

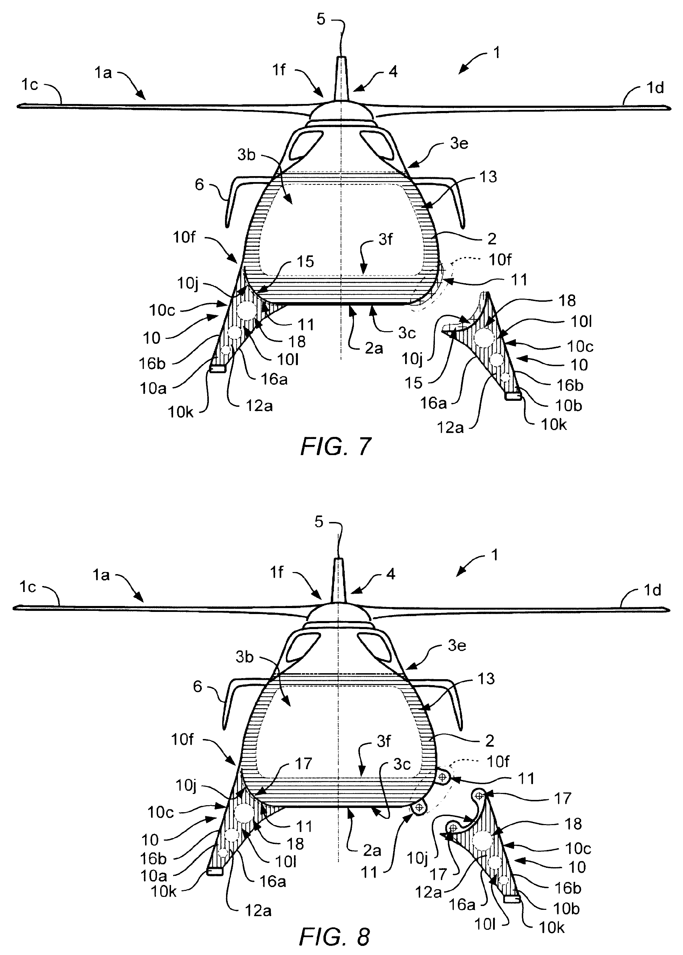

According to one aspect of the present invention, the non-retractable skid-type landing gear 10 comprises at least one landing box 10a (and 10b in Figure 2). The latter preferentially defines a closed structural arrangement. Preferably, the at least one landing box 10a (and 10b in Figure 2) is provided with a skid-type landing base member 10k and an associated box shell 10c that delimits an internal volume (10l in Figure 7 and Figure 8) of the at least one landing box 10a (and 10b in Figure 2).

It should be noted that in the context of the present invention the expression "non-retractable skid-type landing gear" refers to any landing gear that is fixedly mounted to a fuselage and that is not adapted for being retracted into adequate storage compartments provided within the fuselage, or outside thereof within additional sponsons. Furthermore, the term "skid-type" in this expression is not intended for limiting the inventive landing gear to a landing gear with skids. More specifically, the skid-type landing base members 10k are not necessarily skids and can be implemented by any base member that is suitable for defining a contact surface and supporting an associated aircraft on ground. In other words, the skid-type landing base members 10k can be implemented by means of any bar-, rod- or lath-shaped element that is sufficiently strong for providing a required stability for an aircraft that is standing thereon on ground.

According to one aspect of the present invention, the at least one landing box 10a (and 10b in Figure 2) of the non-retractable skid-type landing gear 10 is detachably mounted to the fuselage 2. In other words, the non-retractable skid-type landing gear 10 and, more specifically, the at least one landing box 10a (and 10b in Figure 2), defines an individual exchangeable system module. Preferentially, the non-retractable skid-type landing gear 10 and, more specifically, the at least one landing box 10a (and 10b in Figure 2), is mounted to the fuselage 2 at associated interconnection regions 10f.

Preferably, the at least one landing box 10a (and 10b in Figure 2) is at least partially water tight and/or adapted for carrying aircraft equipment 9. By way of example, the at least one landing box 10a (and 10b in Figure 2) is at least adapted for carrying emergency floatation devices 9a and/or at least one fuel tank 9b.

It should, however, be noted that the at least one landing box 10a (and 10b in Figure 2) is not limited to carrying the emergency flotation devices 9a and/or the at least one fuel tank 9b. Instead, it can also be adapted for carrying any other required outboard equipment, such as optic sensorial systems, lights, live rafts, armament, etc., as well as e. g. damping devices.

Preferably, the at least one landing box 10a (and 10b in Figure 2) comprises access openings 10e that are adapted for enabling access to the aircraft equipment 9 that is stored in the at least one landing box 10a (and 10b in Figure 2). By way of example, the at least one landing box 10a (and 10b in Figure 2) is equipped with, or implements, boarding steps 10d that are illustratively adapted for boarding and accessing the aircraft 1 via an aircraft door 7.

According to one aspect of the present invention, the at least one landing box 10a (and 10b in Figure 2) exhibits a landing box basis 10g. More specifically, the landing box basis 10g is defined by the skid-type landing base member 10k and represents a predetermined landing contact area of the non-retractable skid-type landing gear 10, which illustratively extends longitudinally along a central portion of the aircraft 1 and e. g: corresponds at least approximately to a skid basis of a conventional skid-type landing gear.

The aircraft 1 is exemplarily embodied as a rotary wing aircraft and, more particularly, as a helicopter with at least one multi-blade main rotor 1a for providing lift and forward or backward thrust during operation. Therefore, the aircraft 1 is also referred to hereinafter as the "helicopter 1" for simplicity and clarity. It should, however, be noted that the present invention is not limited to helicopters and can likewise be applied to other aircrafts that can be equipped with a non-retractable skid-type landing gear according to the present invention.

For purposes of illustration, the helicopter 1 is shown with a first axis 8a in longitudinal direction, which is defined by the helicopter's roll axis that is inherent to the helicopter 1 and which is hereinafter referred to as the "roll axis 8a" for simplicity and clarity. The helicopter 1 is further shown with a second axis 8b in height direction, which is defined by the helicopter's yaw axis and which is hereinafter referred to as the "yaw axis 8b" for simplicity and clarity. Preferably, but not necessarily, the helicopter 1 is symmetrical about the yaw axis 8b and the roll axis 8a.

The at least one multi-blade main rotor 1 a illustratively comprises a plurality of rotor blades 1b, 1 c (and 1 d, 1 e in Figure 2). The latter are mounted at an associated rotor head 1f that is arranged on top of the fuselage 2 to a rotor shaft, which rotates in operation of the helicopter 1 around an associated rotor axis.

Preferably, the fuselage 2 defines at least a cockpit 3a of the helicopter 1. Illustratively, the fuselage 2 further defines a cabin 3b of the helicopter 1 that is exemplarily accessible via the aircraft door 7 and that may further define one or more cargo compartments. Exemplarily, the cockpit 3a is also accessible via the aircraft door 7.

According to one aspect of the present invention, the fuselage 2 comprises a lower shell 3c, which is arranged in the region of the fuselage underside 2a, and side shells 3e that are arranged on each side of the helicopter 1. Preferably, the fuselage 2 further defines a tail boom 3d.

By way of example, the helicopter 1 comprises at least one preferentially shrouded counter-torque device 4 configured to provide counter-torque during operation, i. e. to counter the torque created by rotation of the at least one multi-blade main rotor 1a for purposes of balancing the helicopter 1 in terms of yaw. The at least one counter-torque device 4 is illustratively provided at an aft section of the tail boom 3d, which preferably further comprises a fin 5 and a horizontal tail 6.

Figure 2 shows the helicopter 1 of Figure 1 with the fuselage 2, the multi-blade main rotor 1a and the non-retractable skid-type landing gear 10. By way of example, the multi-blade main rotor 1a comprises in addition to the rotor blades 1b, 1 c of Figure 1 two more rotor blades, i. e. rotor blades 1d, 1e. The non-retractable skid-type landing gear 10 comprises in addition to the landing box 10a of Figure 1 another landing box 10b, both of which are laterally arranged on the helicopter 1 and preferably similarly embodied, at least with respect to their basis configuration described above and hereinafter. It should be noted that the term "laterally arranged" refers in the context of the present invention to an arrangement in a lateral or sideward direction 8c of the helicopter 1, which is defined by the helicopter's pitch axis and which is hereinafter referred to as the "pitch axis 8c" for simplicity and clarity.

Illustratively, the helicopter 1 has an overall width 1 g that is defined in direction of the pitch axis 8c by its fuselage 2 and the non-retractable skid-type landing gear 10 that is mounted to the fuselage 2. This overall width 1g is preferably considerably greater than a root width 10h of each one of the landing boxes 10a, 10b, preferentially at least three and illustratively at least five times greater, wherein the root width 10h is also defined in direction of the pitch axis 8c. Furthermore, each one of the landing boxes 10a, 10b illustratively comprises a root length 10i that is defined in direction of the roll axis 8a of the helicopter 1 and that is preferably also considerably greater than the root width 10h of each one of the landing boxes 10a, 10b, preferentially at least six times greater.

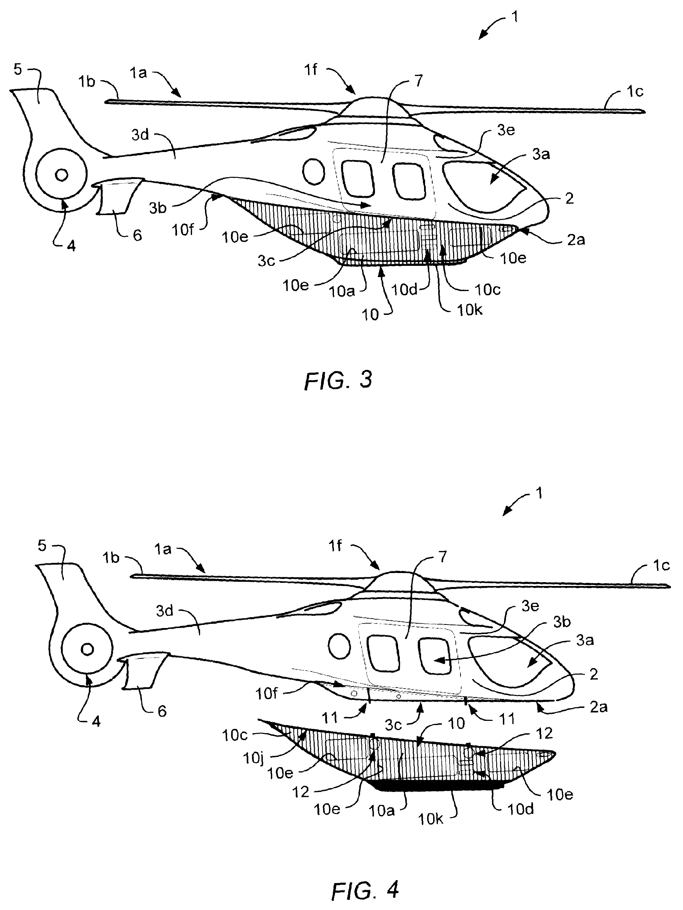

Figure 3 shows the helicopter 1 of Figure 1 and Figure 2 with the fuselage 2, the multi-blade main rotor 1a and the non-retractable skid-type landing gear 10. Illustratively, the non-retractable skid-type landing gear 10 is highlighted and, more specifically, shown with a hatching in order to further illustrate a preferred size of the non-retractable skid-type landing gear 10, i. e. its landing boxes 10a, 10b, in relation to the fuselage 2.

Figure 4 shows the helicopter 1 of Figure 3 with the fuselage 2, the multi-blade main rotor 1a and the non-retractable skid-type landing gear 10. Illustratively, the non-retractable skid-type landing gear 10 is detached from the fuselage 2 so that the fuselage underside 2a and the lower shell 3c of the fuselage 2 are visible.

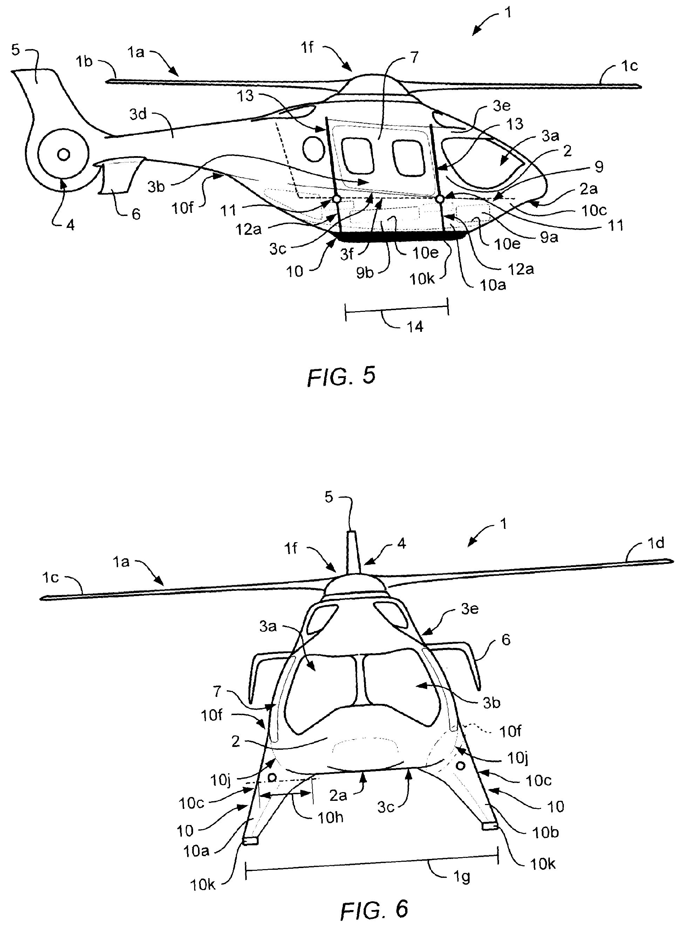

According to one aspect of the present invention, the non-retractable skid-type landing gear 10, i. e. its landing box 10a (and 10b in Figure 5 to Figure 8), comprises an interface perimeter 10j, which abuts to the fuselage underside 2a, i. e. the lower shell 3c of the fuselage 2, when the non-retractable skid-type landing gear 10, i. e. its landing box 10a (and 10b in Figure 5 to Figure 8) is mounted to the fuselage 2, as shown in Figure 3, for example. Mounting is performed by means of suitable joints, as described below with reference to Figure 7 and Figure 8, between the non-retractable skid-type landing gear 10, i. e. its landing box 10a (and 10b in Figure 5 to Figure 8) and main attachment points 11 provided at the fuselage underside 2a, i. e. the lower shell 3c of the fuselage 2. These main attachment points 11 are preferably implemented as main load bearing parts.

In order to allow for an easy and comfortable mounting and dismounting of the non-retractable skid-type landing gear 10, i. e. its landing box 10a (and 10b in Figure 5 to Figure 8), the latter is provided with suitable main attachment access panels 12, preferably on each side. The latter are adapted to allow access to the main attachment points 11 provided at the fuselage underside 2a, i. e. the lower shell 3c of the fuselage 2, when the non-retractable skid-type landing gear 10, i. e. its landing box 10a (and 10b in Figure 5 to Figure 8) is mounted to the fuselage 2, as shown in Figure 3, for example, so that dismounting is possible. Similarly, the main attachment access panels 12 can be used for accessing to the main attachment points 11 during mounting of the non-retractable skid-type landing gear 10, i. e. its landing box 10a (and 10b in Figure 5 to Figure 8), to the fuselage underside 2a, i. e. the lower shell 3c of the fuselage 2.

Figure 5 shows the helicopter 1 of Figure 1 to Figure 3 with the fuselage 2, the multi-blade main rotor 1 a and the non-retractable skid-type landing gear 10. Illustratively, the non-retractable skid-type landing gear 10 is shown as a transparent component for depicting constituent components thereof. The fuselage 2 is only partly shown as a transparent component for depicting two exemplary main frames 13 thereof, which are exemplarily arranged on each side of the aircraft door 7 and which are used for attachment of the non-retractable skid-type landing gear 10. However, more than two main frames 13 can likewise be provided.

According to one aspect of the present invention, the non-retractable skid-type landing gear 10 and, more specifically, the landing box 10a - and likewise the landing box 10b of Figure 2 - comprises at least two main ribs 12a that are preferably at least essentially arranged perpendicularly to a longitudinal extension of the landing box 10a, i. e. to its skid-type landing base member 10k. The at least two main ribs 12a are illustratively spaced apart by a predetermined distance 14 that is preferentially smaller than the landing box basis 10g of Figure 1, which defines the length of the skid-type landing base member 10k.

Preferably, the at least two main ribs 12a of the landing box 10a are attached to the two main frames 13 of the fuselage 2 at the main attachment points 11 by means of suitable joints, as described below with reference to Figure 7 and Figure 8. The main attachment points 11 are exemplarily provided in the region of a floor level 3f of the helicopter 1.

Figure 6 shows the helicopter 1 of Figure 1 to Figure 5 with the fuselage 2, the multi-blade main rotor 1 a and the non-retractable skid-type landing gear 10. The latter comprises the landing box 10a of Figure 1 to Figure 5 and the landing box 10b of Figure 2, which exemplarily define a U-shaped form with the fuselage 2. Figure 6 further illustrates the overall width 1 g of the helicopter 1, the root width 10h of the landing boxes 10a, 10b and the interface perimeters 10j of the landing boxes 10a, 10b that abut the fuselage 2 in the interconnection regions 10f.

Figure 7 shows the helicopter 1 of Figure 1 to Figure 6 with the fuselage 2 that comprises the side shells 3e and the lower shell 3c, the multi-blade main rotor 1 a and the non-retractable skid-type landing gear 10. The latter comprises the landing boxes 10a, 10b of Figure 6. Illustratively, the landing box 10b is detached from the fuselage 2.

Preferably, at least the landing box 10a and, preferentially, both landing boxes 10a, 10b are provided with the skid-type landing base member 10k and the associated box shell 10c, as described above with reference to Figure 1. The associated box shell 10c preferably delimits an internal volume 10l in each one of the landing boxes 10a, 10b.

The internal volume 10l is preferably at least essentially hollow and adapted for accommodating the aircraft equipment 9 of Figure 1, as described above with reference to Figure 1. In other words, the aircraft equipment 9 can be arranged within the internal volume 10l. Furthermore, the internal volume 10l preferentially accommodates, i. e. houses at least essentially the main ribs 12a of the landing boxes 10a, 10b of Figure 5.

Preferably, at least one and, illustratively, each one of the landing boxes 10a, 10b comprises one or more at least essentially massive structural support members 18. The latter can be implemented by means of any rod-, bar- or lath-shaped members that comprise a required stiffness such that the one or more structural support members 18 are adapted for stiffening the landing boxes 10a, 10b and, thus, the non-retractable skid-type landing gear 10. Preferably, the at least two main ribs 12a of the landing boxes 10a, 10b are integral to the one or more structural support members 18, or they are at least rigidly attached thereto.

According to one aspect of the present invention, each associated box shell 10c comprises an inboard shell section 16a and an outboard shell section 16b, both of which delimit the internal volume 10l. The inboard shell section 16a and the outboard shell section 16b are preferably integral with the associated skid-type landing base member 10k, or they are at least rigidly attached to the associated skid-type landing base member 10k.

Illustratively, as can be seen with respect to the landing box 10a, the outboard shell section 16b is preferably adapted for defining a streamlined extension to the associated side shell 3e of the fuselage 2, i. e. a loft continuation of the latter. The inboard shell section 16a is preferably adapted for defining a streamlined extension to the lower shell 3c of the fuselage 2, i. e. a loft continuation of the latter.

According to one aspect of the present invention, the landing boxes 10a, 10b are mounted to the fuselage underside 2a, i. e. the lower shell 3c of the fuselage 2, by means of a screwed joint provided in a screwed joint region 15, which is further illustrated with respect to the detached landing box 10b. However, such a screwed joint is well known to the person skilled in the art and, therefore, not illustrated and described in greater detail, for simplicity and clarity of the drawings and brevity and conciseness of the description.

Figure 8 shows the helicopter 1 of Figure 1 to Figure 6 with the fuselage 2 having the fuselage underside 2a, the multi-blade main rotor 1a and the non-retractable skid-type landing gear 10. The latter comprises the landing boxes 10a, 10b of Figure 6. Illustratively, the landing box 10b is detached from the fuselage 2.

According to one aspect of the present invention, the landing boxes 10a, 10b are mounted to the fuselage underside 2a, i. e. the lower shell 3c of the fuselage 2, by means of a pin-in-lug joint provided in a pin-in-lug joint region 17, which is further illustrated with respect to the detached landing box 10b and wherein the pins are preferably oriented at least essentially in parallel to the roll axis 8a of Figure 1. However, such a pin-in-lug joint is also well known to the person skilled in the art and, therefore, not illustrated and described in greater detail, for simplicity and clarity of the drawings and brevity and conciseness of the description.

It should be noted that modifications to the above described embodiments are within the common knowledge of the person skilled in the art and, thus, also considered as being part of the present invention. For instance, while it is mentioned that the landing boxes 10a, 10b are mounted to the fuselage underside 2a, i. e. the lower shell 3c of the fuselage 2, the drawing figures stipulate an attachment that is at least partly located at the side shells 3e. However, the location of the attachment, i. e. the mounting of the landing boxes 10a, 10b to the fuselage 2 as such is irrelevant and only depends on a predetermined configuration and construction of the landing boxes 10a, 10b, i. e. their box shells 10c with the inboard and outboard shell sections 16a, 16b. Consequently, any attachment, i. e. mounting location other than the described one(s) are also contemplated as being part of the present invention. Furthermore, also combinations of the above described configurations are contemplated. For instance, one of the landing boxes 10a, 10b can be attached by means of a screwed joint, while the other one is attached by means of a pin-in-lug joint. Likewise, the screwed and pin-in-lug joints are only described by way of example and not for limiting the invention accordingly. Instead, any suitable quick release fasteners can be used. Moreover, the landing boxes 10a, 10b can be provided with differently structured internal configurations within their internal volumes 10l, dependent on the aircraft equipment 9 that should be carried therewith, and so on.

### Reference List

- 1: aircraft
- 1a: multi-blade main rotor
- 1b, 1c, 1d, 1e: rotor blades
- 1f: rotor head
- 1g: aircraft width
- 2: fuselage
- 2a: fuselage underside
- 3a: cockpit
- 3b: cabin
- 3c: fuselage lower shell
- 3d: tail boom
- 3e: fuselage side shell
- 3f: floor level
- 4: counter-torque device
- 5: fin
- 6: horizontal tail
- 7: cabin door
- 8a: roll axis
- 8b: yaw axis
- 8c: pitch axis
- 9: aircraft equipment
- 9a: emergency floatation devices
- 9b: fuel tanks
- 10: non-retractable skid-type landing gear
- 10a, 10b: landing boxes
- 10c: box shells
- 10d: boarding steps
- 10e: landing box access openings
- 10f: landing box interconnection regions
- 10g: landing box basis
- 10h: landing box root width
- 10i: landing box root length
- 10j: landing box interface perimeter
- 10k: skid-type landing base members
- 10l: landing box internal volume
- 11: fuselage main attachment points
- 12: landing box main attachment access panels
- 12a: landing box main ribs
- 13: aircraft main frames
- 14: main frame distance
- 15: screwed joint region
- 16a: inboard shell section
- 16b: outboard shell section
- 17: pin-in-lug joint region
- 18: massive structural support member

## Claims

1. An aircraft (1) with a fuselage (2) and a non-retractable skid-type landing gear (10) that is mounted to the fuselage (2), **characterized in that** the non-retractable skid-type landing gear (10) comprises at least one landing box (10a, 10b), the at least one landing box (10a, 10b) being provided with a skid-type landing base member (10k) and an associated box shell (10c) that delimits an internal volume (10l) of the at least one landing box (10a, 10b).

2. The aircraft (1) according to claim 1,
**characterized in that** the associated box shell (10c) comprises an inboard shell section (16a) and an outboard shell section (16b), the inboard shell section (16a) and the outboard shell section (16b) being integral with the skid-type landing base member (10k) or being at least rigidly attached to the skid-type landing base member (10k).

3. The aircraft (1) according to claim 2,
**characterized in that** the outboard shell section (16b) is adapted for defining a streamlined extension to a side shell (3e) of the fuselage (2)

4. The aircraft (1) according to claim 2,
**characterized in that** the inboard shell section (16a) is adapted for defining a streamlined extension to a lower shell (3c) of the fuselage (2).

5. The aircraft (1) according to claim 1,
**characterized in that** the at least one landing box (10a, 10b) comprises at least two main ribs (12a) that are at least essentially arranged perpendicularly to a longitudinal extension of the at least one landing box (10a, 10b).

6. The aircraft (1) according to claim 5,
**characterized in that** the at least one landing box (10a, 10b) comprises an at least essentially massive structural support member (18), the at least two main ribs (12a) being integral to the at least essentially massive structural support member (18) or being at least rigidly attached to the at least essentially massive structural support member (18).

7. The aircraft (1) according to claim 1,
**characterized in that** the at least one landing box (10a, 10b) is mounted by means of a screwed joint and/or a pin-in-lug joint to the fuselage (2).

8. The aircraft (1) according to claim 1,
**characterized in that** the at least one landing box (10a, 10b) is adapted for carrying aircraft equipment (9) arranged within the internal volume (10l).

9. The aircraft (1) according to claim 1,
**characterized in that** the at least one landing box (10a, 10b) is at least adapted for carrying emergency floatation devices (9a) arranged within the internal volume (10l).

10. The aircraft (1) according to claim 1,
**characterized in that** the at least one landing box (10a, 10b) is at least adapted for carrying at least one fuel tank (9b) arranged within the internal volume (10l).

11. The aircraft (1) according to claim 1,
**characterized in that** the at least one landing box (10a, 10b) is at least partially water tight.

12. The aircraft (1) according to claim 1,
**characterized in that** the at least one landing box (10a, 10b) is detachably mounted to the fuselage (2).

13. The aircraft (1) according to claim 1,
**characterized in that** the at least one landing box (10a, 10b) comprises a root width (10h) that is at least three times smaller than an overall aircraft width (1g).

14. The aircraft (1) according to claim 1,
**characterized in that** the aircraft (1) is a rotary wing aircraft.

15. A non-retractable skid-type landing gear (10) that is mountable to a fuselage (2) of an aircraft (1), **characterized by** comprising at least one landing box (10a, 10b), the at least one landing, box (10a, 10b) being provided with a skid-type landing base member (10k) and an associated box shell (10c) that delimits an internal volume (10l) of the at least one landing box (10a, 10b).
